# EUROPEAN PATENT SPECIFICATION

(11) **EP 3 270 631 B1**
(45) Date of publication and mention of the grant of the patent: **19.06.2019**
(21) Application number: 15886976.8
(22) Date of filing: 03.04.2015
(51) Int. Cl.: H04W 72/08, H04W 16/14

(54) **DATA TRANSMISSION METHOD, DEVICE AND SYSTEM OF TIME DIVISION DUPLEX WIRELESS DATA TRANSMISSION SYSTEM**
DATENÜBERTRAGUNGSVERFAHREN, -VORRICHTUNG UND -SYSTEM FÜR ZEITDUPLEX-DRAHTLOSDATENÜBERTRAGUNGSSYSTEM
PROCÉDÉ, DISPOSITIF ET SYSTÈME DE TRANSMISSION DE DONNÉES D'UN SYSTÈME DE TRANSMISSION DE DONNÉES SANS FIL À DUPLEXAGE PAR RÉPARTITION TEMPORELLE

(43) Date of publication of application: 17.01.2018
(73) Proprietor: Huawei Technologies Co., Ltd., Longgang District Shenzhen, Guangdong 518129 (CN)
(72) Inventor: LI, Qiong, Shenzhen Guangdong 518129 (CN); XU, Shaofeng, Shenzhen Guangdong 518129 (CN)
(74) Representative: Körber, Martin Hans
(86) International application number: PCT/CN2015/075870
(87) International publication number: WO 2016/155006

(56) References cited:
- EP-A1- 2 134 123
- EP-A1- 2 337 391
- WO-A1-2008/072037
- WO-A2-2014/083419
- CN-A- 1 367 956
- CN-A- 1 399 478
- CN-A- 102 326 354
- CN-A- 103 200 589

## Description

### TECHNICAL FIELD

The present invention relates to communications technologies, and in particular, to a data transmission method and apparatus in a time division duplex wireless data transmission system, and a system.

### BACKGROUND

In a microwave transmission system, because a spectrum of an unlicensed (unlicence) frequency band is free, use of the frequency band for transmission can reduce substantial operation and maintenance costs for a communications operator. However, due to openness of the spectrum of the unlicensed frequency band, multiple types of complex interference exist, and affect normal operating of the microwave transmission system. Therefore, how to avoid interference is particularly important for the microwave transmission system.

In the prior art, initial frequency band scanning is performed after a microwave transmission system is powered on, all bandwidth in an available frequency band range is scanned, all frequency band scanning information is stored in a frequency configuration table, and a frequency band that is least interfered with is selected for data transmission. If multiple times of frequency band switching fail because a frequency band in the frequency configuration table is also interfered with in use, frequency band scanning is triggered again, an available frequency band is obtained in real time, and switching to the available frequency band is performed, so as to avoid interference.

However, by using the prior art, on an unlicensed frequency band, a frequency band that is not interfered with during initial scanning is easily interfered with in a subsequent operating process. Therefore, there is a high probability of triggering frequency band scanning again, and service interruption is caused. Particularly, in a case of a relatively wide unlicensed frequency band, a time for completing one time of frequency band scanning is relatively long, and a service interruption time is also relatively long.

The document WO 2014/083419 A2 shows a method and system for spectrum detection when ultra high frequency band TV white spaces are accessed by an LTE-A system, wherein sub-frames not carrying important system information are selected for spectrum detection in the uplink or downlink. Spectrum detection in a user equipment of a communication system includes the steps of: for each detection period, detecting a signal from a target system in a specific downlink detection sub-frame of each frame in a detection duration; and sending a detection result to a base station at the end of the detection duration, wherein the detection result is used for determining whether one or more frequency bands of the target system are available. Spectrum detection in the base station includes the steps of detecting a signal from the target system in a specific uplink detection sub-frame of each frame in a detection duration; and determining whether the one or more frequency bands of the target system are available according to the detection result from the one or more user equipment and a detection result of the base station.

### SUMMARY

Embodiments of the present invention provide a data transmission method and apparatus in a time division duplex wireless data transmission system, and a system, so as to resolve a possible service interruption problem in a data transmission process in an existing microwave transmission system.

A first aspect of the embodiments of the present invention provides a time division duplex wireless data transmission system, as defined in claim 13.

With reference to the first aspect, in a first possible implementation of the first aspect, that the second transmission device is configured to: perform, in a timeslot corresponding to the idle frame, interference detection on a to-be-detected frequency band corresponding to the idle frame in an available spectrum is specifically: the second transmission device switches, in the timeslot corresponding to the idle frame, the current operating frequency band to the to-be-detected frequency band corresponding to the idle frame, and performs interference detection on the to-be-detected frequency band.

With reference to the first possible implementation of the first aspect, in a second possible implementation of the first aspect, that the second transmission device is configured to perform interference detection on the to-be-detected frequency band is specifically: the second transmission device obtains received signal strength indication RSSI information of the to-be-detected frequency band to perform interference detection on the to-be-detected frequency band.

With reference to any one of the first aspect to the second possible implementation of the first aspect, in a third possible implementation of the first aspect, that the second transmission device is configured to switch, according to the interference statistics of the available spectrum when interference to a current operating frequency band is greater than a preset threshold, the operating frequency band to a frequency band that meets a preset condition is specifically: the second transmission device switches, according to the interference statistics of the available spectrum when the interference to the current operating frequency band is greater than the preset threshold, the operating frequency band to a frequency band that is least interfered with.

With reference to the second possible implementation of the first aspect, in a fourth possible implementation of the first aspect, the second transmission device is configured to determine a priority of each frequency band in the available spectrum according to RSSI information of each frequency band in the interference statistics of the available spectrum, where interference to a frequency band with a high priority is less than that to a frequency band with a low priority.

With reference to the fourth possible implementation of the first aspect, in a fifth possible implementation of the first aspect, that the second transmission device is configured to switch, according to the interference statistics of the available spectrum when interference to a current operating frequency band is greater than a preset threshold, the operating frequency band to a frequency band that meets a preset condition is specifically: when the interference to the current operating frequency band is greater than the preset threshold, the second transmission device is configured to switch the operating frequency band to a frequency band with a highest priority according to the priority of each frequency band in the available spectrum.

A second aspect of the embodiments of the present invention provides a data transmission method in a time division duplex wireless data transmission system as defined in claim 1, including:
generating, by a first transmission device, an idle frame and a service frame;
sending, by the first transmission device, the service frame to a second transmission device;
sending, by the first transmission device, the idle frame to the second transmission device after each time the first transmission device sends a preset quantity of service frames to the second transmission device
receiving, by the second transmission device, a service frame sent by the first transmission device, and receiving an idle frame that is sent by the first transmission device after each time the first transmission device sends a preset quantity of service frames;
performing, by the second transmission device in a timeslot corresponding to the idle frame, interference detection on a to-be-detected frequency band corresponding to the idle frame in an available spectrum, wherein the available spectrum is divided into to-be-detected frequency bands according to a preset sequence and each to-be-detected frequency band is associated with a different idle frame, obtaining an interference detection result of the to-be-detected frequency band, and updating the interference detection result of the to-be-detected frequency band in interference statistics of the available spectrum; and
switching, by the second transmission device according to the interference statistics of the available spectrum when interference to a current operating frequency band is greater than a preset threshold, the operating frequency band to a frequency band that meets a preset condition, where
the first transmission device is a data transmitter device, and the second transmission device is a data receiver device.

With reference to the second aspect, in a first possible implementation of the second aspect, the performing, by the second transmission device in a timeslot corresponding to the idle frame, interference detection on a to-be-detected frequency band corresponding to the idle frame in an available spectrum includes:
switching, by the second transmission device in the timeslot corresponding to the idle frame, the current operating frequency band to the to-be-detected frequency band corresponding to the idle frame, and performing interference detection on the to-be-detected frequency band.

With reference to the first possible implementation of the second aspect, in a second possible implementation of the second aspect, the performing, by the second transmission device, interference detection on the to-be-detected frequency band includes:
obtaining, by the second transmission device, received signal strength indication RSSI information of the to-be-detected frequency band to perform interference detection on the to-be-detected frequency band.

With reference to the second aspect to the second possible implementation of the second aspect, in a third possible implementation of the second aspect, the switching, by the second transmission device according to the interference statistics of the available spectrum when interference to a current operating frequency band is greater than a preset threshold, the operating frequency band to a frequency band that meets a preset condition includes:
switching, by the second transmission device according to the interference statistics of the available spectrum when the interference to the current operating frequency band is greater than the preset threshold, the operating frequency band to a frequency band that is least interfered with.

With reference to the second possible implementation of the second aspect, in a fourth possible implementation of the second aspect, after the obtaining, by the second transmission device, received signal strength indication RSSI information of the to-be-detected frequency band to perform interference detection on the to-be-detected frequency band, the method further includes:
determining, by the second transmission device, a priority of each frequency band in the available spectrum according to RSSI information of each frequency band in the available spectrum, where
interference to a frequency band with a high priority is less than that to a frequency band with a low priority.

With reference to the fourth possible implementation of the second aspect, in a fifth possible implementation of the second aspect, the switching, by the second transmission device according to the interference statistics of the available spectrum when interference to a current operating frequency band is greater than a preset threshold, the operating frequency band to a frequency band that meets a preset condition includes:
when the interference to the current operating frequency band is greater than the preset threshold, switching, by the second transmission device, the operating frequency band to a frequency band with a highest priority according to the priority of each frequency band in the available spectrum.

A third aspect of the embodiments of the present invention provides a data transmission apparatus in a time division duplex wireless data transmission system as defined in claim 7, including:
a receiving module, configured to: receive a service frame sent by a first transmission device, and receive an idle frame that is sent by the first transmission device after each time the first transmission device sends a preset quantity of service frames;
a detection module, configured to: perform, in a timeslot corresponding to the idle frame, interference detection on a to-be-detected frequency band corresponding to the idle frame in an available spectrum, wherein the available spectrum is divided into to-be-detected frequency bands according to a preset sequence and each to-be-detected frequency band is associated with a different idle frame, obtain an interference detection result of the to-be-detected frequency band, and update the interference detection result of the to-be-detected frequency band in interference statistics of the available spectrum; and
a switching module, configured to switch, according to the interference statistics of the available spectrum when interference to a current operating frequency band is greater than a preset threshold, the operating frequency band to a frequency band that meets a preset condition.

With reference to the third aspect, in a first possible implementation of the third aspect, the detection module is specifically configured to: switch, in the timeslot corresponding to the idle frame, the current operating frequency band to the to-be-detected frequency band corresponding to the idle frame, and perform interference detection on the to-be-detected frequency band.

With reference to the first possible implementation of the third aspect, in a second possible implementation of the third aspect, the detection module is specifically configured to obtain received signal strength indication RSSI information of the to-be-detected frequency band to perform interference detection on the to-be-detected frequency band.

With reference to any one of the third aspect to the second possible implementation of the third aspect, in a third possible implementation of the third aspect, the switching module is specifically configured to switch, according to the interference statistics of the available spectrum when the interference to the current operating frequency band is greater than the preset threshold, the operating frequency band to a frequency band that is least interfered with.

With reference to the second possible implementation of the third aspect, in a fourth possible implementation of the third aspect, the apparatus further includes a determining module, where
the determining module is configured to: after the detection module obtains the received signal strength indication RSSI information of the to-be-detected frequency band to perform interference detection on the to-be-detected frequency band, determine a priority of each frequency band in the available spectrum according to RSSI information of each frequency band in the available spectrum, where interference to a frequency band with a high priority is less than that to a frequency band with a low priority.

With reference to the fourth possible implementation of the third aspect, in a fifth possible implementation of the third aspect, the switching module is specifically configured to: when the interference to the current operating frequency band is greater than the preset threshold, switch the operating frequency band to a frequency band with a highest priority according to the priority of each frequency band in the available spectrum.

According to the data transmission method and apparatus in the time division duplex wireless data transmission system, and the system provided in the embodiments of the present invention, a first transmission device sends an idle frame to a second transmission device after each time the first transmission device sends a preset quantity of service frames to the second transmission device. The second transmission device performs, in a timeslot corresponding to the idle frame, interference detection on a to-be-detected frequency band corresponding to the idle frame in an available spectrum, obtains an interference detection result, updates interference statistics of the available spectrum, and switches, according to the interference statistics of the available spectrum when interference to a current operating frequency band is greater than a preset threshold, the operating frequency band to a frequency band that meets a preset condition. Therefore, interference detection is performed in an idle frame, and service interruption is avoided. In addition, interference detection is performed at an interval of a period of time, so that a status of interference to each frequency band can be updated in a timely manner, and a switching failure that is caused due to interference to a selected frequency band is avoided.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of Embodiment 1 of a time division duplex wireless data transmission system according to the present invention;
FIG. 2 is a schematic flowchart of a data transmission method in a time division duplex wireless data transmission system;
FIG. 3 is a schematic flowchart of Embodiment 2 of a data transmission method in a time division duplex wireless data transmission system according to the present invention;
FIG. 4 is a schematic flowchart of Embodiment 3 of a data transmission method in a time division duplex wireless data transmission system according to the present invention;
FIG. 5 is a schematic structural diagram of Embodiment 1 of a data transmission apparatus in a time division duplex wireless data transmission system according to the present invention;
FIG. 6 is a schematic structural diagram of Embodiment 2 of a data transmission apparatus in a time division duplex wireless data transmission system according to the present invention; and
FIG. 7 is a schematic structural diagram of Embodiment 3 of a data transmission apparatus in a time division duplex wireless data transmission system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

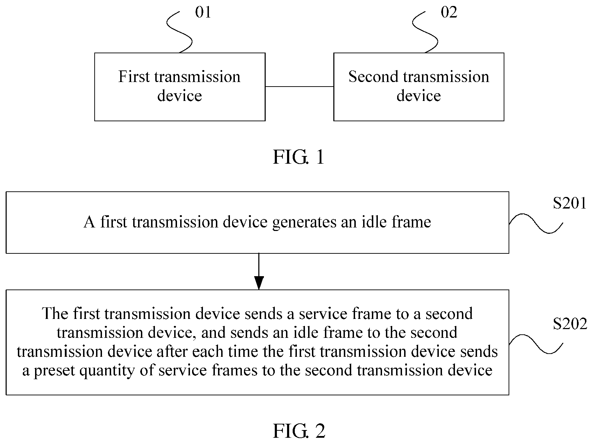

FIG. 1 is a schematic structural diagram of Embodiment 1 of a time division duplex wireless data transmission system according to the present invention. As shown in FIG. 1, the system includes a first transmission device 01 and a second transmission device 02. The first transmission device 01 is a data transmitter device, and the second transmission device 02 is a data receiver device. The time division duplex (TDD) data transmission system may be a TDD microwave transmission system. The second transmission device 02 may be powered on to capture frame synchronization information of the first transmission device 01, so as to synchronize with the first transmission device 01.

It should be noted that the TDD data transmission system is generally a half-duplex system. In the system, the two devices are not limited as a transmitter or a receiver, but are determined according to a data stream direction. When a data stream flows from the first transmission device 01 to the second transmission device 02, the first transmission device 01 is used as a transmitter device, and the second transmission device 02 is used as a receiver device. On the contrary, the first transmission device 01 may be used as a receiver device, and the second transmission device 02 may be used as a transmitter device.

The first transmission device 01 and the second transmission device 02 may have exactly the same internal structures, and may include a modem and a central processing unit (CPU). The modem may be configured to generate an idle frame and perform interference detection. Specifically, a modem of a transmitter is configured to generate an idle frame, and a modem of a receiver is configured to perform interference detection. The CPU is configured to: determine interference magnitude according to an interference detection result, and select an operating frequency band.

In this embodiment, the first transmission device 01 is used as a transmitter device, and the second transmission device 02 is used as a receiver device.

Specifically, the first transmission device 01 is configured to: send a service frame to the second transmission device, and send an idle frame to the second transmission device 02 after each time the first transmission device 01 sends a preset quantity of service frames to the second transmission device 02. That is, the first transmission device 01 periodically sends the service frame and the idle frame, and sends an idle frame at an interval of the preset quantity of service frames. The idle frame does not include any service information.

In a specific implementation process, after the first transmission device 01 is synchronized with the second transmission device 02, the first transmission device 01 sends idle frame sending period negotiation information to the second transmission device 02, and the second transmission device 02 may learn, according to the idle frame sending period negotiation information, a period of sending the idle frame by the first transmission device 01.

The second transmission device 02 is configured to: perform, in a timeslot corresponding to the idle frame, interference detection on a to-be-detected frequency band corresponding to the idle frame in an available spectrum, obtain an interference detection result of the to-be-detected frequency band, and update the interference detection result of the to-be-detected frequency band in interference statistics of the available spectrum.

Other frequency bands than a current operating frequency band in the available spectrum may be used as to-be-detected frequency bands.

Interference detection results of all frequency bands in the available spectrum are recorded in the interference statistics, and may be recorded in a form of a table. After detection of the to-be-detected frequency band is completed, corresponding data in the interference statistics is updated.

For example, assuming that a total current available frequency band is 81-82 G, and bandwidth of a transmission device is set to 250 M, the available frequency band may be divided into four frequency bands (band): 81 G-81.25 G, 81.25 G-81.5 G, 81.5 G-81.75 G, and 81.75 G-82 G. If a current operating frequency band is 81.25-81.5 G, interference detection is performed only on the three other bands. Specifically, to-be-detected frequency bands may be determined according to a particular preset sequence, and interference detection is performed on the to-be-detected frequency bands. For example, after the first idle frame is received, interference detection is performed on 81 G-81.25 G in a timeslot corresponding to the first idle frame; after the second idle frame is received, interference detection is performed on 81.5 G-81.75 G in a timeslot corresponding to the second idle frame; and after the third idle frame is received, interference detection is performed on 81.75 G-82 G in a timeslot corresponding to the third idle frame.

The second transmission device 02 is configured to switch, according to the interference statistics of the available spectrum when interference to a current operating frequency band is greater than a preset threshold, the operating frequency band to a frequency band that meets a preset condition.

Specifically, when detecting that the interference to the current operating frequency band is greater than the preset threshold, the second transmission device 02 triggers frequency band switching. The second transmission device 02 selects, according to the current interference statistics, a frequency band that is less interfered with as a new operating frequency band, and hands over all services to the new operating frequency band for processing.

Generally, in the system, an operating frequency band is pre-configured to process all the services. If the pre-configured operating frequency band is interfered with, a new operating frequency band is selected, and all the services are handed over to the new operating frequency band for processing.

The second transmission device 02 collects statistics about a mean square error (MES) signal of an operating frequency band, when finding that quality of the MES signal deteriorates, detects whether the operating frequency band is interfered with, and when detecting that the interference to the current operating frequency band is greater than the preset threshold, triggers frequency band switching, that is, reports a frequency band switching request to a CPU of the second transmission device, and the CPU selects a frequency band that is currently least interfered with as a new operating frequency band.

In this embodiment, a first transmission device sends an idle frame to a second transmission device after each time the first transmission device sends a preset quantity of service frames to the second transmission device. The second transmission device performs, in a timeslot corresponding to the idle frame, interference detection on a to-be-detected frequency band corresponding to the idle frame in an available spectrum, obtains an interference detection result, updates interference statistics of the available spectrum, and switches, according to the interference statistics of the available spectrum when interference to a current operating frequency band is greater than a preset threshold, the operating frequency band to a frequency band that meets a preset condition. In this way, interference detection is performed in an idle frame, and service interruption is avoided. In addition, interference detection is performed at an interval of a period of time, so that a status of interference to each frequency band can be updated in a timely manner, and a switching failure that is caused due to interference to a selected frequency band is avoided.

Further, that the second transmission device 02 is configured to perform, in a timeslot corresponding to the idle frame, interference detection on a to-be-detected frequency band corresponding to the idle frame in an available spectrum may be specifically: the second transmission device 02 switches, in the timeslot corresponding to the idle frame, the current operating frequency band to the to-be-detected frequency band corresponding to the idle frame, and performs interference detection on the to-be-detected frequency band.

The foregoing example is used for description. If the current operating frequency band is 81.25 G-81.5 G, after the first idle frame is received, and interference detection is performed on 81 G-81.25 G in the timeslot corresponding to the first idle frame, the current operating frequency band is switched from 81.25 G-81.5 G to 81 G-81.25 G, and interference detection is performed on 81 G-81.25 G. After detection is completed, the current operating frequency band is switched to the original operating frequency band 81.25-81.5 G again.

That the second transmission device 02 is configured to perform interference detection on the to-be-detected frequency band is specifically: the second transmission device 02 obtains received signal strength indication (RSSI) information of the to-be-detected frequency band to perform interference detection on the available spectrum, and obtains the interference detection result. However, this constitutes no limitation. Interference detection is mainly performed to detect various types of interference to the to-be-detected frequency band in an environment.

Further, the second transmission device 02 updates the interference statistics, and may update the RSSI information of the to-be-detected frequency band in an interference statistics table. Specifically, the second transmission device 02 may establish an interference statistics table. The interference statistics table stores interference-related information of each frequency band in the available spectrum. For example, the interference statistics table may be shown in Table 1.

**Table 1**

| **Frequency band** | **Available or not** | **Magnitude of signal interference** | **Storage time** |
|---|---|---|---|
| f1 | Y | A | xx: xx |
| f2 | Y | A+X1 (dB) | xx: xx |
| f3 | X | A+X2 (dB) | xx: xx |
| f4 | X | A+X2 (dB) | xx: xx |
| ... | ... | ... | ... |
| ... | ... | ... | ... |
| fn | Y | A+Xn (dB) | xx: xx |

Based on the foregoing embodiment, that the second transmission device 02 is configured to switch, according to the interference statistics of the available spectrum when interference to a current operating frequency band is greater than a preset threshold, the operating frequency band to a frequency band that meets a preset condition is specifically: the operating frequency band is switched, according to the interference statistics of the available spectrum when the interference to the current operating frequency band is greater than the preset threshold, to a frequency band that is least interfered with. In a specific implementation process, magnitude of signal interference to each frequency band may be analyzed according to RSSI information of each frequency band, and the frequency band that is least interfered with is selected as a new operating frequency band.

In another embodiment, the second transmission device 02 may further determine a priority of each frequency band in the available spectrum according to RSSI information of each frequency band in the interference statistics of the available spectrum, where interference to a frequency band with a high priority is less than that to a frequency band with a low priority.

Specifically, a priority column may be added to the interference statistics table, and the priority corresponding to each frequency band is identified. Sorting may be performed in descending order of priorities, and a frequency band with a high priority is ranked in the front of the interference statistics table.

In a specific implementation process, that the second transmission device 02 is configured to switch, according to the interference statistics of the available spectrum when interference to a current operating frequency band is greater than a preset threshold, the operating frequency band to a frequency band that meets a preset condition is specifically: when the interference to the current operating frequency band is greater than the preset threshold, the second transmission device 02 switches the operating frequency band to a frequency band with a highest priority according to the priority of each frequency band in the available spectrum. That is, the operating frequency band is switched to a frequency band that is least interfered with.

FIG. 2 is a schematic flowchart of a data transmission method in a time division duplex wireless data transmission system. Based on the foregoing embodiment, a first transmission device is used as an execution body, and the method includes the following steps:
S201. The first transmission device generates an idle frame, where the idle frame does not include any service information.
S202. The first transmission device sends a service frame to a second transmission device, and sends an idle frame to the second transmission device after each time the first transmission device sends a preset quantity of service frames to the second transmission device.

The first transmission device is a data transmitter device, and the second transmission device is a data receiver device.

In this example, a first transmission device generates an idle frame, and sends an idle frame to a second transmission device after each time the first transmission device sends a preset quantity of service frames to the second transmission device. The second transmission device performs, in a timeslot corresponding to the idle frame, interference detection on an available spectrum, and obtains an interference detection result. Because no service needs to be executed in a timeslot corresponding to an idle frame, service interruption is avoided. In addition, interference detection is performed at an interval of a period of time, so that a status of interference to each frequency band can be updated in a timely manner.

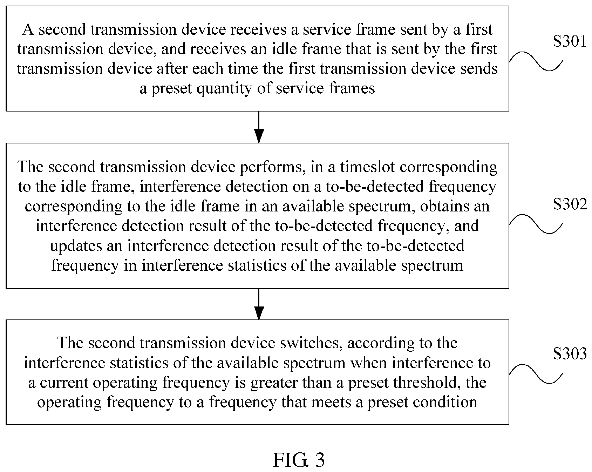

FIG. 3 is a schematic flowchart of Embodiment 2 of a data transmission method in a time division duplex wireless data transmission system according to the present invention. Based on the foregoing embodiment, a second transmission device is used as an execution body, and the method includes the following steps.

S301. The second transmission device receives a service frame sent by a first transmission device, and receives an idle frame that is sent by the first transmission device after each time the first transmission device sends a preset quantity of service frames.

The idle frame does not include any service information. That is, the second transmission device does not need to execute any service in a timeslot corresponding to the idle frame.

S302. The second transmission device performs, in a timeslot corresponding to the idle frame, interference detection on a to-be-detected frequency band corresponding to the idle frame in an available spectrum, obtains an interference detection result of the to-be-detected frequency band, and updates the interference detection result of the to-be-detected frequency band in interference statistics of the available spectrum.

S303. The second transmission device switches, according to the interference statistics of the available spectrum when interference to a current operating frequency band is greater than a preset threshold, the operating frequency band to a frequency band that meets a preset condition.

The first transmission device is a data transmitter device, and the second transmission device is a data receiver device.

In this embodiment, a second transmission device performs, in a timeslot corresponding to an idle frame, interference detection on a to-be-detected frequency band corresponding to the idle frame in an available spectrum, obtains an interference detection result of the to-be-detected frequency band, updates the interference detection result of the to-be-detected frequency band in interference statistics of the available spectrum, and switches, according to the interference statistics of the available spectrum when interference to a current operating frequency band is greater than a preset threshold, the operating frequency band to a frequency band that meets a preset condition. Therefore, interference detection is performed in an idle frame, and service interruption is avoided. In addition, interference detection is performed at an interval of a period of time, so that a status of interference to each frequency band can be updated in a timely manner, and a switching failure that is caused due to interference to a selected frequency band is avoided.

Based on the foregoing embodiment, that the second transmission device performs, in a timeslot corresponding to the idle frame, interference detection on a to-be-detected frequency band corresponding to the idle frame in an available spectrum may be: the second transmission device switches, in the timeslot corresponding to the idle frame, the current operating frequency band to the to-be-detected frequency band corresponding to the idle frame, and performs interference detection on the to-be-detected frequency band. Certainly, this constitutes no limitation, and interference detection may be performed according to another parameter. For details, refer to the foregoing system embodiment. Details are not described herein again.

In another embodiment, that the second transmission device performs interference detection on the to-be-detected frequency band may be specifically: the second transmission device obtains RSSI information of the to-be-detected frequency band to perform interference detection on the to-be-detected frequency band.

Based on the foregoing embodiment, in another embodiment, after the second transmission device performs interference detection on the to-be-detected frequency band in the timeslot corresponding to the idle frame, and obtains the interference detection result, the second transmission device may update the interference detection result of the to-be-detected frequency band in the interference statistics of the available spectrum. Specifically, for the interference statistics table, refer to Table 1. Details are not described herein again.

Correspondingly, that the second transmission device switches, according to the interference statistics of the available spectrum when interference to a current operating frequency band is greater than a preset threshold, the operating frequency band to a frequency band that meets a preset condition may be: the second transmission device switches, according to the interference statistics of the available spectrum when the interference to the current operating frequency band is greater than the preset threshold, the operating frequency band to a frequency band that is least interfered with.

Further, in another embodiment, after the second transmission device obtains the RSSI information of the to-be-detected frequency band to perform interference detection on the to-be-detected frequency band, the second transmission device may further determine a priority of each frequency band in the available spectrum according to RSSI information of each frequency band in the available spectrum. Specifically, the second transmission device may record the priority of each frequency band in the available spectrum in the interference statistics of the available spectrum. Interference to a frequency band with a high priority is less than that to a frequency band with a low priority.

Correspondingly, that the second transmission device switches, according to the interference statistics of the available spectrum when interference to a current operating frequency band is greater than a preset threshold, the operating frequency band to a frequency band that meets a preset condition may be: when the interference to the current operating frequency band is greater than the preset threshold, the second transmission device switches the operating frequency band to a frequency band with a highest priority according to the priority of each frequency band in the available spectrum.

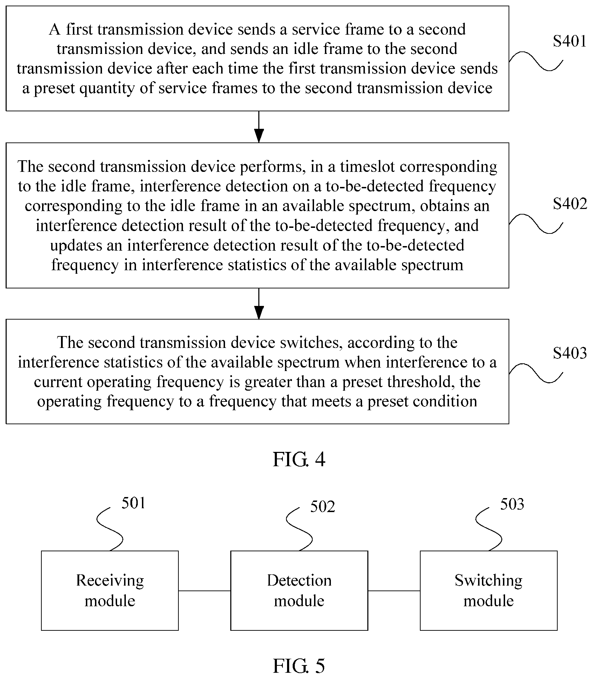

FIG. 4 is a schematic flowchart of Embodiment 3 of a data transmission method in a time division duplex wireless data transmission system according to the present invention. For the time division duplex wireless data transmission system, refer to the embodiment shown in FIG. 1. The method is a method executed in the system shown in FIG. 1. Specifically, the method includes the following steps.

S401. A first transmission device sends a service frame to a second transmission device, and sends an idle frame to the second transmission device after each time the first transmission device sends a preset quantity of service frames to the second transmission device.

The idle frame does not include any service information.

S402. The second transmission device performs, in a timeslot corresponding to the idle frame, interference detection on a to-be-detected frequency band corresponding to the idle frame in an available spectrum, obtains an interference detection result of the to-be-detected frequency band, and updates the interference detection result of the to-be-detected frequency band in interference statistics of the available spectrum.

Other frequency bands than a current operating frequency band in the available spectrum may be used as to-be-detected frequency bands.

Interference detection results of all frequency bands in the available spectrum are recorded in the interference statistics, and may be recorded in a form of a table. After detection of the to-be-detected frequency band is completed, corresponding data in the interference statistics is updated.

For example, assuming that a total current available frequency band is 81-82 G, and bandwidth of a transmission device is set to 250 M, the available frequency band may be divided into four frequency bands (band): 81 G-81.25 G, 81.25 G-81.5 G, 81.5 G-81.75 G, and 81.75 G-82 G. If a current operating frequency band is 81.25-81.5 G, interference detection is performed only on the three other bands. Specifically, to-be-detected frequency bands may be determined according to a particular preset sequence, and interference detection is performed on the to-be-detected frequency bands. For example, after the first idle frame is received, interference detection is performed on 81 G-81.25 G in a timeslot corresponding to the first idle frame; after the second idle frame is received, interference detection is performed on 81.5 G-81.75 G in a timeslot corresponding to the second idle frame; and after the third idle frame is received, interference detection is performed on 81.75 G-82 G in a timeslot corresponding to the third idle frame.

S403. The second transmission device switches, according to the interference statistics of the available spectrum when interference to a current operating frequency band is greater than a preset threshold, the operating frequency band to a frequency band that meets a preset condition.

Specifically, when detecting that the interference to the current operating frequency band is greater than the preset threshold, the second transmission device 02 triggers frequency band switching. The second transmission device 02 selects, according to the current interference statistics, a frequency band that is less interfered with as a new operating frequency band, and hands over all services to the new operating frequency band for processing.

Generally, in the system, an operating frequency band is pre-configured to process all the services. If the pre-configured operating frequency band is interfered with, a new operating frequency band is selected, and all the services are handed over to the new operating frequency band for processing.

The second transmission device collects statistics about an MES signal, when finding that quality of the MES signal deteriorates, detects whether the operating frequency band is interfered with, and when detecting that the interference to the current operating frequency band is greater than the preset threshold, triggers frequency band switching, that is, reports a frequency band switching request to a CPU of the second transmission device, and the CPU selects a frequency band that is currently least interfered with as a new operating frequency band.

The first transmission device is a data transmitter device, and the second transmission device is a data receiver device.

In this embodiment, a first transmission device sends a service frame to a second transmission device, and sends an idle frame to the second transmission device after each time the first transmission device sends a preset quantity of service frames to the second transmission device. The second transmission device performs, in a timeslot corresponding to the idle frame, interference detection on a to-be-detected frequency band corresponding to the idle frame in an available spectrum, obtains an interference detection result of the to-be-detected frequency band, updates the interference detection result of the to-be-detected frequency band in interference statistics of the available spectrum, and switches, according to the interference statistics of the available spectrum when interference to a current operating frequency band is greater than a preset threshold, the operating frequency band to a frequency band that meets a preset condition. Therefore, interference detection is performed in an idle frame, and service interruption is avoided. In addition, interference detection is performed at an interval of a period of time, so that a status of interference to each frequency band can be updated in a timely manner, and a switching failure that is caused due to interference to a selected frequency band is avoided.

Further, that the second transmission device performs, in a timeslot corresponding to the idle frame, interference detection on a to-be-detected frequency band corresponding to the idle frame in an available spectrum is specifically: the second transmission device switches, in the timeslot corresponding to the idle frame, the current operating frequency band to the to-be-detected frequency band corresponding to the idle frame, and performs interference detection on the to-be-detected frequency band.

Based on the foregoing embodiment, in another embodiment, that the second transmission device performs interference detection on the to-be-detected frequency band may be: the second transmission device obtains received signal strength indication RSSI information of the to-be-detected frequency band to perform interference detection on the to-be-detected frequency band.

In another embodiment, that the second transmission device switches, according to the interference statistics of the available spectrum when interference to a current operating frequency band is greater than a preset threshold, the operating frequency band to a frequency band that meets a preset condition may be specifically: the second transmission device switches, according to the interference statistics of the available spectrum when the interference to the current operating frequency band is greater than the preset threshold, the operating frequency band to a frequency band that is least interfered with.

In a specific implementation process, after the second transmission device obtains the received signal strength indication RSSI information of the to-be-detected frequency band to perform interference detection on the to-be-detected frequency band, the second transmission device may determine a priority of each frequency band in the available spectrum according to RSSI information of each frequency band in the available spectrum. Interference to a frequency band with a high priority is less than that to a frequency band with a low priority.

Based on this, that the second transmission device switches, according to the interference statistics of the available spectrum when interference to a current operating frequency band is greater than a preset threshold, the operating frequency band to a frequency band that meets a preset condition may be: when the interference to the current operating frequency band is greater than the preset threshold, the second transmission device switches the operating frequency band to a frequency band with a highest priority according to the priority of each frequency band in the available spectrum.

FIG. 5 is a schematic structural diagram of Embodiment 1 of a data transmission apparatus in a time division duplex wireless data transmission system according to the present invention. The apparatus may be integrated into the foregoing second transmission device. As shown in FIG. 5, the apparatus includes a receiving module 501, a detection module 502, and a switching module 503.

The receiving module 501 is configured to: receive a service frame sent by a first transmission device, and receive an idle frame that is sent by the first transmission device after each time the first transmission device sends a preset quantity of service frames.

The detection module 502 is configured to: perform, in a timeslot corresponding to the idle frame, interference detection on a to-be-detected frequency band corresponding to the idle frame in an available spectrum, obtain an interference detection result of the to-be-detected frequency band, and update the interference detection result of the to-be-detected frequency band in interference statistics of the available spectrum.

The switching module 503 is configured to switch, according to the interference statistics of the available spectrum when interference to a current operating frequency band is greater than a preset threshold, the operating frequency band to a frequency band that meets a preset condition.

In this embodiment, the apparatus performs, in a timeslot corresponding to an idle frame, interference detection on a to-be-detected frequency band corresponding to the idle frame in an available spectrum, obtains an interference detection result of the to-be-detected frequency band, updates the interference detection result of the to-be-detected frequency band in interference statistics of the available spectrum, and switches, according to the interference statistics of the available spectrum when interference to a current operating frequency band is greater than a preset threshold, the operating frequency band to a frequency band that meets a preset condition. Therefore, interference detection is performed in an idle frame, and service interruption is avoided. In addition, interference detection is performed at an interval of a period of time, so that a status of interference to each frequency band can be updated in a timely manner, and a switching failure that is caused due to interference to a selected frequency band is avoided.

The detection module 502 is specifically configured to: switch, in the timeslot corresponding to the idle frame, the current operating frequency band to the to-be-detected frequency band corresponding to the idle frame, and perform interference detection on the to-be-detected frequency band.

The detection module 502 is specifically configured to obtain received signal strength indication RSSI information of the to-be-detected frequency band to perform interference detection on the to-be-detected frequency band.

The switching module 503 is specifically configured to switch, according to the interference statistics of the available spectrum when the interference to the current operating frequency band is greater than the preset threshold, the operating frequency band to a frequency band that is least interfered with.

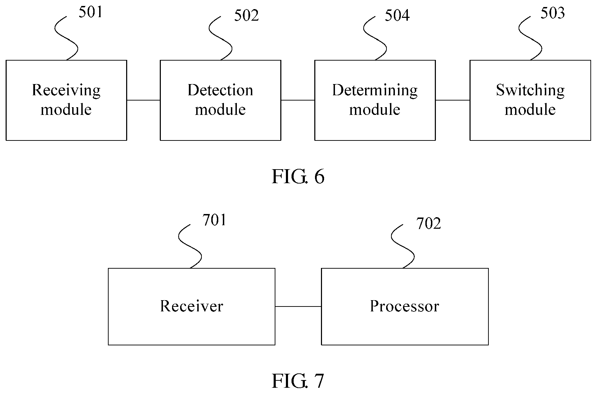

FIG. 6 is a schematic structural diagram of Embodiment 2 of a data transmission apparatus in a time division duplex wireless data transmission system according to the present invention. As shown in FIG. 6, based on FIG. 5, the apparatus further includes a determining module 504, configured to: after the detection module obtains the received signal strength indication RSSI information of the to-be-detected frequency band to perform interference detection on the to-be-detected frequency band, determine a priority of each frequency band in the available spectrum according to RSSI information of each frequency band in the available spectrum. Interference to a frequency band with a high priority is less than that to a frequency band with a low priority.

Based on this, correspondingly, the switching module 503 is specifically configured to: when the interference to the current operating frequency band is greater than the preset threshold, switch the operating frequency band to a frequency band with a highest priority according to the priority of each frequency band in the available spectrum.

The apparatus is configured to implement the method embodiment shown in FIG. 3. An implementation principle and a technical effect of the apparatus are similar to those in the method embodiment shown in FIG. 3, and details are not described herein again.

FIG. 7 is a schematic structural diagram of Embodiment 3 of a data transmission apparatus in a time division duplex wireless data transmission system according to the present invention. The apparatus may be integrated into the foregoing second transmission device. As shown in FIG. 7, the apparatus includes a receiver 701 and a processor 702.

The receiver 701 is configured to: receive a service frame sent by a first transmission device, and receive an idle frame that is sent by the first transmission device after each time the first transmission device sends a preset quantity of service frames.

The processor 702 is configured to: perform, in a timeslot corresponding to the idle frame, interference detection on a to-be-detected frequency band corresponding to the idle frame in an available spectrum, obtain an interference detection result of the to-be-detected frequency band, and update the interference detection result of the to-be-detected frequency band in interference statistics of the available spectrum; and switch, according to the interference statistics of the available spectrum when interference to a current operating frequency band is greater than a preset threshold, the operating frequency band to a frequency band that meets a preset condition.

In this embodiment, the apparatus performs, in a timeslot corresponding to an idle frame, interference detection on a to-be-detected frequency band corresponding to the idle frame in an available spectrum, obtains an interference detection result of the to-be-detected frequency band, updates the interference detection result of the to-be-detected frequency band in interference statistics of the available spectrum, and switches, according to the interference statistics of the available spectrum when interference to a current operating frequency band is greater than a preset threshold, the operating frequency band to a frequency band that meets a preset condition. Therefore, interference detection is performed in an idle frame, and service interruption is avoided. In addition, interference detection is performed at an interval of a period of time, so that a status of interference to each frequency band can be updated in a timely manner, and a switching failure that is caused due to interference to a selected frequency band is avoided.

The processor 702 is specifically configured to: switch, in the timeslot corresponding to the idle frame, the current operating frequency band to the to-be-detected frequency band corresponding to the idle frame, and perform interference detection on the to-be-detected frequency band.

Specifically, the processor 702 may be configured to obtain received signal strength indication RSSI information of the to-be-detected frequency band to perform interference detection on the to-be-detected frequency band.

The processor 702 is specifically configured to switch, according to the interference statistics of the available spectrum when the interference to the current operating frequency band is greater than the preset threshold, the operating frequency band to a frequency band that is least interfered with.

In another embodiment, the processor 702 is further configured to: after obtaining the received signal strength indication RSSI information of the to-be-detected frequency band to perform interference detection on the to-be-detected frequency band, determine a priority of each frequency band in the available spectrum according to RSSI information of each frequency band in the available spectrum. Interference to a frequency band with a high priority is less than that to a frequency band with a low priority.

Based on this, the processor 702 is specifically configured to: when the interference to the current operating frequency band is greater than the preset threshold, switch the operating frequency band to a frequency band with a highest priority according to the priority of each frequency band in the available spectrum.

The apparatus is configured to implement the method embodiment shown in FIG. 3. An implementation principle and a technical effect of the apparatus are similar to those in the method embodiment shown in FIG. 3, and details are not described herein again.

In the several embodiments provided in the present invention, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the solutions of the embodiments.

In addition, function units in the embodiments of the present invention may be integrated into one processing unit, or each of the units may exist alone physically, or two or more units are integrated into one unit. The integrated unit may be implemented in a form of hardware, or may be implemented in a form of hardware in addition to a software function unit.

When the foregoing integrated unit is implemented in a form of a software function unit, the integrated unit may be stored in a computer-readable storage medium. The software function unit is stored in a storage medium and includes several instructions for instructing a computer device (which may be a personal computer, a server, or a network device) or a processor to perform some of the steps of the methods described in the embodiments of the present invention. The foregoing storage medium includes any medium that can store program code, such as a USB flash drive, a removable hard disk, a read-only memory (ROM), a random access memory (RAM), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention defined by the appended claims.

## Claims

1. A data transmission method in a time division duplex wireless data transmission system, comprising:
generating (S201), by a first transmission device, an idle frame and a service frame;
sending, by the first transmission device, the service frame to a second transmission device;
sending, by the first transmission device, the idle frame to the second transmission device after each time the first transmission device sends a preset quantity of service frames to the second transmission device;
receiving (S301), by the second transmission device, a service frame sent by the first transmission device, and receiving the idle frame that is sent by the first transmission device after each time the first transmission device sends a preset quantity of service frames;
performing, by the second transmission device in a timeslot corresponding to the idle frame, interference detection on a to-be-detected frequency band corresponding to the idle frame in an available spectrum, wherein the available spectrum is divided into to-be-detected frequency bands according to a preset sequence and each to-be-detected frequency band is associated with a different idle frame, obtaining an interference detection result of the to-be-detected frequency band, and updating the interference detection result of the to-be-detected frequency band in interference statistics of the available spectrum; and
switching (S303), by the second transmission device according to the interference statistics of the available spectrum when interference to a current operating frequency band is greater than a preset threshold, the operating frequency band to a frequency band that meets a preset condition.

2. The method according to claim 1, wherein the performing, by the second transmission device in a timeslot corresponding to the idle frame, interference detection on a to-be-detected frequency band corresponding to the idle frame in an available spectrum comprises:
switching, by the second transmission device in the timeslot corresponding to the idle frame, the current operating frequency band to the to-be-detected frequency band corresponding to the idle frame, and performing interference detection on the to-be-detected frequency band.

3. The method according to claim 2, wherein the performing, by the second transmission device, interference detection on the to-be-detected frequency band comprises:
obtaining, by the second transmission device, received signal strength indication, RSSI information of the to-be-detected frequency band to perform interference detection on the to-be-detected frequency band.

4. The method according to any one of claims 1 to 3, wherein the switching, by the second transmission device according to the interference statistics of the available spectrum when interference to a current operating frequency band is greater than a preset threshold, the operating frequency band to a frequency band that meets a preset condition comprises:
switching, by the second transmission device according to the interference statistics of the available spectrum when the interference to the current operating frequency band is greater than the preset threshold, the operating frequency band to a frequency band that is least interfered with.

5. The method according to claim 3, wherein after the obtaining, by the second transmission device, received signal strength indication RSSI information of the to-be-detected frequency band to perform interference detection on the to-be-detected frequency band, the method further comprises:
determining, by the second transmission device, a priority of each frequency band in the available spectrum according to RSSI information of each frequency band in the available spectrum, wherein
interference to a frequency band with a high priority is less than that to a frequency band with a low priority.

6. The method according to claim 5, wherein the switching, by the second transmission device according to the interference statistics of the available spectrum when interference to a current operating frequency band is greater than a preset threshold, the operating frequency band to a frequency band that meets a preset condition comprises:
when the interference to the current operating frequency band is greater than the preset threshold, switching, by the second transmission device, the operating frequency band to a frequency band with a highest priority according to the priority of each frequency band in the available spectrum.

7. A data transmission apparatus for a time division duplex wireless data transmission system, comprising:
a receiving module (501), configured to: receive a service frame sent by a first transmission device, and receive an idle frame that is sent by the first transmission device after each time the first transmission device sends a preset quantity of service frames;
a detection module (502), configured to: perform, in a timeslot corresponding to the idle frame, interference detection on a to-be-detected frequency band corresponding to the idle frame in an available spectrum, wherein the available spectrum is divided into to-be-detected frequency bands according to a preset sequence and each to-be-detected frequency band is associated with a different idle frame, obtain an interference detection result of the to-be-detected frequency band, and update the interference detection result of the to-be-detected frequency band in interference statistics of the available spectrum; and
a switching module (503), configured to switch, according to the interference statistics of the available spectrum when interference to a current operating frequency band is greater than a preset threshold, the operating frequency band to a frequency band that meets a preset condition.

8. The apparatus according to claim 7, wherein the detection module (502) is specifically configured to: switch, in the timeslot corresponding to the idle frame, the current operating frequency band to the to-be-detected frequency band corresponding to the idle frame, and perform interference detection on the to-be-detected frequency band.

9. The apparatus according to claim 8, wherein the detection module (502) is specifically configured to obtain received signal strength indication, RSSI information of the to-be-detected frequency band to perform interference detection on the to-be-detected frequency band.

10. The apparatus according to any one of claims 7 to 9, wherein the switching module (503) is specifically configured to switch, according to the interference statistics of the available spectrum when the interference to the current operating frequency band is greater than the preset threshold, the operating frequency band to a frequency band that is least interfered with.

11. The apparatus according to claim 9, further comprising a determining module (504), wherein
the determining module (504) is configured to: after the detection module (502) obtains the received signal strength indication, RSSI information of the to-be-detected frequency band to perform interference detection on the to-be-detected frequency band, determine a priority of each frequency band in the available spectrum according to RSSI information of each frequency band in the available spectrum, wherein interference to a frequency band with a high priority is less than that to a frequency band with a low priority.

12. The apparatus according to claim 11, wherein the switching module (503) is specifically configured to: when the interference to the current operating frequency band is greater than the preset threshold, switch the operating frequency band to a frequency band with a highest priority according to the priority of each frequency band in the available spectrum.

13. A time division duplex wireless data transmission system, comprising: a first data transmission apparatus, and a second data transmission apparatus according to any one of claims 7 to 12, the first data transmission apparatus comprising: a generating module, configured to: generate an idle frame and a service frame; a sending module, configured to: send the service frame to the second transmission device; send the idle frame to the second transmission device after each time the first transmission device sends a preset quantity of service frames to the second transmission device.

## Patentansprüche

1. Datenübertragungsverfahren in einem drahtlosen Zeitduplex-Datenübertragungssystem, umfassend:
Erzeugen (S201), durch eine erste Übertragungsvorrichtung, eines Leerahmens und eines Dienstrahmens;
Senden, durch die erste Übertragungsvorrichtung, des Dienstrahmens an eine zweite Übertragungsvorrichtung;
Senden, durch die erste Übertragungsvorrichtung, des Leerrahmens an die zweite Übertragungsvorrichtung jedes Mal, nachdem die erste Übertragungsvorrichtung eine vorgegebene Anzahl von Dienstrahmen an die zweite Übertragungsvorrichtung gesendet hat;
Empfangen (S301), durch die zweite Übertragungsvorrichtung, eines von der ersten Übertragungsvorrichtung gesendeten Dienstrahmens, und Empfangen des Leerrahmens, welcher von der ersten Übertragungsvorrichtung jedes Mal gesendet wird, nachdem die erste Übertragungsvorrichtung eine vorgegebene Anzahl von Dienstrahmen gesendet hat;
Durchführen, durch die zweite Übertragungsvorrichtung in einem dem Leerrahmen entsprechenden Zeitschlitz, von Interferenzdetektion auf einem zu detektierenden Frequenzband, das dem Leerrahmen entspricht, in einem verfügbaren Spektrum, wobei das verfügbare Spektrum in zu detektierende Frequenzbänder gemäß einer vorgegebenen Folge aufgeteilt wird und jedes zu detektierende Frequenzband einem anderen Leerrahmen zugeordnet wird, Gewinnen eines Ergebnisses der Interferenzdetektion des zu detektierenden Frequenzbandes und Aktualisieren des Ergebnisses der Interferenzdetektion des zu detektierenden Frequenzbandes in einer Interferenzstatistik des verfügbaren Spektrums; und
Umschalten (S303), durch die zweite Übertragungsvorrichtung gemäß der Interferenzstatistik des verfügbaren Spektrums, wenn die Interferenz zu einem aktuellen Betriebsfrequenzband größer als ein vorgegebener Schwellenwert ist, des Betriebsfrequenzbandes zu einem Frequenzband, welches eine vorgegebene Bedingung erfüllt.

2. Verfahren nach Anspruch 1, wobei das Durchführen, durch die zweite Übertragungsvorrichtung in einem dem Leerrahmen entsprechenden Zeitschlitz, von Interferenzdetektion auf einem zu detektierenden Frequenzband, das dem Leerrahmen entspricht, in einem verfügbaren Spektrum umfasst:
Umschalten, durch die zweite Übertragungsvorrichtung in dem dem Leerrahmen entsprechenden Zeitschlitz, des aktuellen Betriebsfrequenzbandes zu dem zu detektierenden Frequenzband, das dem Leerrahmen entspricht, und Durchführen von Interferenzdetektion auf dem zu detektierenden Frequenzband.

3. Verfahren nach Anspruch 2, wobei das Durchführen, durch die zweite Übertragungsvorrichtung, von Interferenzdetektion auf dem zu detektierenden Frequenzband umfasst:
Gewinnen, durch die zweite Übertragungsvorrichtung, von Empfangssignalstärkeanzeige (Received Signal Strength Indication, RSSI)-Informationen des zu detektierenden Frequenzbandes, um Interferenzdetektion auf dem zu detektierenden Frequenzband durchzuführen.

4. Verfahren nach einem der Ansprüche 1 bis 3, wobei das Umschalten, durch die zweite Übertragungsvorrichtung gemäß der Interferenzstatistik des verfügbaren Spektrums, wenn die Interferenz zu einem aktuellen Betriebsfrequenzband größer als ein vorgegebener Schwellenwert ist, des Betriebsfrequenzbandes zu einem Frequenzband, welches eine vorgegebene Bedingung erfüllt, umfasst:
Umschalten, durch die zweite Übertragungsvorrichtung gemäß der Interferenzstatistik des verfügbaren Spektrums, wenn die Interferenz zu dem aktuellen Betriebsfrequenzband größer als der vorgegebene Schwellenwert ist, des Betriebsfrequenzbandes zu einem Frequenzband, mit dem die Interferenz am geringsten ist.

5. Verfahren nach Anspruch 3, wobei nach dem Gewinnen, durch die zweite Übertragungsvorrichtung, von Empfangssignalstärkeanzeige (Received Signal Strength Indication, RSSI)-Informationen des zu detektierenden Frequenzbandes, um Interferenzdetektion auf dem zu detektierenden Frequenzband durchzuführen, das Verfahren ferner umfasst:
Bestimmen, durch die zweite Übertragungsvorrichtung, einer Priorität jedes Frequenzbandes in dem verfügbaren Spektrum gemäß RSSI-Informationen jedes Frequenzbandes in dem verfügbaren Spektrum, wobei
die Interferenz zu einem Frequenzband mit einer hohen Priorität geringer als diejenige zu einem Frequenzband mit einer niedrigen Priorität ist.

6. Verfahren nach Anspruch 5, wobei das Umschalten, durch die zweite Übertragungsvorrichtung gemäß der Interferenzstatistik des verfügbaren Spektrums, wenn die Interferenz zu einem aktuellen Betriebsfrequenzband größer als ein vorgegebener Schwellenwert ist, des Betriebsfrequenzbandes zu einem Frequenzband, welches eine vorgegebene Bedingung erfüllt, umfasst:
wenn die Interferenz zu dem aktuellen Betriebsfrequenzband größer als der vorgegebene Schwellenwert ist, Umschalten, durch die zweite Übertragungsvorrichtung, des Betriebsfrequenzbandes zu einem Frequenzband mit einer höchsten Priorität gemäß der Priorität jedes Frequenzbandes in dem verfügbaren Spektrum.

7. Datenübertragungsvorrichtung für ein drahtloses Zeitduplex-Datenübertragungssystem, umfassend:
ein Empfangsmodul (501), das dafür ausgelegt ist: einen Dienstrahmen zu empfangen, der von einer ersten Übertragungsvorrichtung gesendet wurde, und einen Leerrahmen zu empfangen, welcher von der ersten Übertragungsvorrichtung jedes Mal gesendet wird, nachdem die erste Übertragungsvorrichtung eine vorgegebene Anzahl von Dienstrahmen gesendet hat;
ein Detektionsmodul (502), das dafür ausgelegt ist: in einem dem Leerrahmen entsprechenden Zeitschlitz Interferenzdetektion auf einem zu detektierenden Frequenzband, das dem Leerrahmen entspricht, in einem verfügbaren Spektrum durchzuführen, wobei das verfügbare Spektrum in zu detektierende Frequenzbänder gemäß einer vorgegebenen Folge aufgeteilt ist und jedes zu detektierende Frequenzband einem anderen Leerrahmen zugeordnet ist, ein Ergebnis der Interferenzdetektion des zu detektierenden Frequenzbandes zu gewinnen und das Ergebnis der Interferenzdetektion des zu detektierenden Frequenzbandes in einer Interferenzstatistik des verfügbaren Spektrums zu aktualisieren; und
ein Umschaltmodul (503), das dafür ausgelegt ist: gemäß der Interferenzstatistik des verfügbaren Spektrums, wenn die Interferenz zu einem aktuellen Betriebsfrequenzband größer als ein vorgegebener Schwellenwert ist, das Betriebsfrequenzband zu einem Frequenzband umzuschalten, welches eine vorgegebene Bedingung erfüllt.

8. Vorrichtung nach Anspruch 7, wobei das Detektionsmodul (502) speziell dafür ausgelegt ist: in dem dem Leerrahmen entsprechenden Zeitschlitz das aktuelle Betriebsfrequenzband zu dem zu detektierenden Frequenzband, das dem Leerrahmen entspricht, umzuschalten und Interferenzdetektion auf dem zu detektierenden Frequenzband durchzuführen.

9. Vorrichtung nach Anspruch 8, wobei das Detektionsmodul (502) speziell dafür ausgelegt ist, Empfangssignalstärkeanzeige (Received Signal Strength Indication, RSSI)-Informationen des zu detektierenden Frequenzbandes zu gewinnen, um Interferenzdetektion auf dem zu detektierenden Frequenzband durchzuführen.

10. Vorrichtung nach einem der Ansprüche 7 bis 9, wobei das Umschaltmodul (503) speziell dafür ausgelegt ist, gemäß der Interferenzstatistik des verfügbaren Spektrums, wenn die Interferenz zu dem aktuellen Betriebsfrequenzband größer als der vorgegebene Schwellenwert ist, das Betriebsfrequenzband zu einem Frequenzband umzuschalten, mit dem die Interferenz am geringsten ist.

11. Vorrichtung nach Anspruch 9, welche ferner ein Bestimmungsmodul (504) umfasst, wobei
das Bestimmungsmodul (504) dafür ausgelegt ist: nachdem das Detektionsmodul (502) die Empfangssignalstärkeanzeige (Received Signal Strength Indication, RSSI)-Informationen des zu detektierenden Frequenzbandes, um Interferenzdetektion auf dem zu detektierenden Frequenzband durchzuführen, gewonnen hat, eine Priorität jedes Frequenzbandes in dem verfügbaren Spektrum gemäß RSSI-Informationen jedes Frequenzbandes in dem verfügbaren Spektrum zu bestimmen, wobei die Interferenz zu einem Frequenzband mit einer hohen Priorität geringer als diejenige zu einem Frequenzband mit einer niedrigen Priorität ist.

12. Vorrichtung nach Anspruch 11, wobei das Umschaltmodul (503) speziell dafür ausgelegt ist: wenn die Interferenz zu dem aktuellen Betriebsfrequenzband größer als der vorgegebene Schwellenwert ist, das Betriebsfrequenzband zu einem Frequenzband mit einer höchsten Priorität gemäß der Priorität jedes Frequenzbandes in dem verfügbaren Spektrum umzuschalten.

13. Drahtloses Zeitduplex-Datenübertragungssystem, umfassend: eine erste Datenübertragungsvorrichtung und eine zweite Datenübertragungsvorrichtung nach einem der Ansprüche 7 bis 12, wobei die erste Datenübertragungsvorrichtung umfasst: ein Erzeugungsmodul, das dafür ausgelegt ist: einen Leerahmen und einen Dienstrahmen zu erzeugen; ein Sendemodul, das dafür ausgelegt ist: den Dienstrahmen an die zweite Übertragungsvorrichtung zu senden; den Leerrahmen jedes Mal, nachdem die erste Übertragungsvorrichtung eine vorgegebene Anzahl von Dienstrahmen an die zweite Übertragungsvorrichtung gesendet hat, an die zweite Übertragungsvorrichtung zu senden.

## Revendications

1. Procédé de transmission de données dans un système de transmission de données sans fil à duplexage par répartition temporelle, comprenant :
la génération (S201), par un premier dispositif de transmission, d'une trame inactive et d'une trame de service ;
l'envoi, par le premier dispositif de transmission, de la trame de service à un second dispositif de transmission ;
l'envoi, par le premier dispositif de transmission, de la trame inactive au second dispositif de transmission après chaque envoi par le premier dispositif de transmission d'une quantité prédéfinie de trames de service au second dispositif de transmission ;
la réception (S301), par le second dispositif de transmission, d'une trame de service envoyée par le premier dispositif de transmission, et la réception de la trame inactive qui est envoyée par le premier dispositif de transmission après chaque envoi par le premier dispositif de transmission d'une quantité prédéfinie de trames de service ;
l'exécution, par le second dispositif de transmission, dans un intervalle temporel correspondant à la trame inactive, d'une détection d'interférence sur une bande de fréquences à détecter correspondant à la trame inactive dans un spectre disponible, dans lequel le spectre disponible est divisé en bandes de fréquences à détecter conformément à une séquence prédéfinie et chaque bande de fréquences à détecter est associée à une trame inactive différente, l'obtention d'un résultat de détection d'interférence de la bande de fréquences à détecter, et la mise à jour du résultat de détection d'interférence de la bande de fréquences à détecter dans des statistiques d'interférence du spectre disponible ; et
la commutation (S303), par le second dispositif de transmission conformément aux statistiques d'interférence du spectre disponible lorsque l'interférence avec une bande de fréquences en cours de fonctionnement est supérieure à un seuil prédéfini, de la bande de fréquences en cours de fonctionnement sur une bande de fréquences qui satisfait à une condition prédéfinie.

2. Procédé selon la revendication 1, dans lequel l'exécution, par le second dispositif de transmission, dans un intervalle temporel correspondant à la trame inactive, d'une détection d'interférence sur une bande de fréquences à détecter correspondant à la trame inactive dans un spectre disponible comprend :
la commutation, par le second dispositif de transmission, dans l'intervalle temporel correspondant à la trame inactive, de la bande de fréquences en cours de fonctionnement sur la bande de fréquences à détecter correspondant à la trame inactive, et l'exécution de la détection d'interférence sur la bande de fréquences à détecter.

3. Procédé selon la revendication 2, dans lequel l'exécution, par le second dispositif de transmission, d'une détection d'interférence sur la bande de fréquences à détecter comprend :
l'obtention, par le second dispositif de transmission, d'informations d'indication d'intensité de signal reçu, RSSI, de la bande de fréquences à détecter pour exécuter la détection d'interférence sur la bande de fréquences à détecter.

4. Procédé selon l'une quelconque des revendications 1 à 3, dans lequel la commutation, par le second dispositif de transmission conformément aux statistiques d'interférence du spectre disponible lorsque l'interférence avec une bande de fréquences en cours de fonctionnement est supérieure à un seuil prédéfini, de la bande de fréquences en cours de fonctionnement sur une bande de fréquences qui satisfait à une condition prédéfinie comprend :
la commutation, par le second dispositif de transmission conformément aux statistiques d'interférence du spectre disponible lorsque l'interférence avec la bande de fréquences en cours de fonctionnement est supérieure à un seuil prédéfini, de la bande de fréquences en cours de fonctionnement sur une bande de fréquences qui subit l'interférence la plus faible.

5. Procédé selon la revendication 3, dans lequel après l'obtention, par le second dispositif de transmission, des informations d'indication d'intensité de signal reçu RSSI de la bande de fréquences à détecter pour exécuter la détection d'interférence sur la bande de fréquences à détecter, le procédé comprend en outre :
la détermination, par le second dispositif de transmission, d'une priorité de chaque bande de fréquences dans le spectre disponible conformément aux informations de RSSI de chaque bande de fréquences dans le spectre disponible, dans lequel l'interférence avec une bande de fréquences de priorité élevée est inférieure à celle avec une bande de fréquence de priorité faible.

6. Procédé selon la revendication 5, dans lequel la commutation, par le second dispositif de transmission conformément aux statistiques d'interférence du spectre disponible lorsque l'interférence avec une bande de fréquences en cours de fonctionnement est supérieure à un seuil prédéfini, de la bande de fréquences en cours de fonctionnement sur une bande de fréquences qui satisfait à une condition prédéfinie comprend :
lorsque l'interférence avec la bande de fréquences en cours de fonctionnement est supérieure au seuil prédéfini, la commutation, par le second dispositif de transmission, de la bande de fréquences en cours de fonctionnement sur une bande de fréquences de priorité la plus élevée conformément à la priorité de chaque bande de fréquences dans le spectre disponible.

7. Appareil de transmission de données pour un système de transmission de données sans fil à duplexage par répartition temporelle, comprenant :
un module de réception (501), configuré pour : recevoir une trame de service envoyée par un premier dispositif de transmission, et recevoir une trame inactive qui est envoyée par le premier dispositif de transmission après chaque envoi par le premier dispositif de transmission d'une quantité prédéfinie de trames de service ;
un module de détection (502), configuré pour : exécuter, dans un intervalle temporel correspondant à la trame inactive, une détection d'interférence sur une bande de fréquences à détecter correspondant à la trame inactive dans un spectre disponible, dans lequel le spectre disponible est divisé en bandes de fréquences à détecter conformément à une séquence prédéfinie et chaque bande de fréquences à détecter est associée à une trame inactive différente, obtenir un résultat de détection d'interférence de la bande de fréquences à détecter, et mettre à jour le résultat de détection d'interférence de la bande de fréquences à détecter dans des statistiques d'interférence du spectre disponible ; et
un module de commutation (503), configuré pour commuter, conformément aux statistiques d'interférence du spectre disponible lorsque l'interférence avec une bande de fréquences en cours de fonctionnement est supérieure à un seuil prédéfini, la bande de fréquences en cours de fonctionnement sur une bande de fréquences qui satisfait à une condition prédéfinie.

8. Appareil selon la revendication 7, dans lequel le module de détection (502) est spécifiquement configuré pour : commuter, dans l'intervalle temporel correspondant à la trame inactive, la bande de fréquences en cours de fonctionnement sur la bande de fréquences à détecter correspondant à la trame inactive, et exécuter la détection d'interférence sur la bande de fréquences à détecter.

9. Appareil selon la revendication 8, dans lequel le module de détection (502) est spécifiquement configuré pour obtenir des informations d'indication d'intensité de signal reçu, RSSI, de la bande de fréquences à détecter pour exécuter la détection d'interférence sur la bande de fréquences à détecter.

10. Appareil selon l'une quelconque des revendications 7 à 9, dans lequel le module de commutation (503) est spécifiquement configuré pour commuter, conformément aux statistiques d'interférence du spectre disponible lorsque l'interférence avec la bande de fréquences en cours de fonctionnement est supérieure au seuil prédéfini, la bande de fréquences en cours de fonctionnement sur une bande de fréquences qui subit l'interférence la plus faible.

11. Appareil selon la revendication 9, comprenant en outre un module de détermination (504), dans lequel
le module de détermination (504) est configuré pour : après que le module de détection (502) a obtenu les informations d'indication d'intensité de signal reçu RSSI de la bande de fréquences à détecter pour exécuter la détection d'interférence sur la bande de fréquences à détecter, déterminer une priorité de chaque bande de fréquences dans le spectre disponible conformément aux informations de RSSI de chaque bande de fréquences dans le spectre disponible, dans lequel l'interférence avec une bande de fréquences de priorité élevée est inférieure à celle avec une bande de fréquences de priorité faible.

12. Appareil selon la revendication 11, dans lequel le module de commutation (503) est spécifiquement configuré pour : lorsque l'interférence avec la bande de fréquences en cours de fonctionnement est supérieure au seuil prédéfini, commuter la bande de fréquences en cours de fonctionnement sur une bande de fréquences de priorité la plus élevée conformément à la priorité de chaque bande de fréquences dans le spectre disponible.

13. Système de transmission de données sans fil à duplexage par répartition temporelle, comprenant : un premier appareil de transmission de données, et un second appareil de transmission de données selon l'une quelconque des revendications 7 à 12, le premier appareil de transmission de données comprenant : un module de génération, configuré pour : générer une trame inactive et une trame de service ; un module d'envoi, configuré pour : envoyer la trame de service au second dispositif de transmission ; envoyer la trame inactive au second dispositif de transmission après chaque envoi par le premier dispositif de transmission d'une quantité prédéfinie de trames de service au second dispositif de transmission.
